# EUROPEAN PATENT APPLICATION

(11) **EP 4 814 436 A1**
(43) Date of publication of application: **30.09.2026**
(21) Application number: 24893789.8
(22) Date of filing: 05.07.2024
(51) Int. Cl.: G01B 11/24

(54) **SYSTEM AND METHOD FOR MEASURING SHAPE OF LENS SURFACE**

(30) Priority: 22.11.2023 JP 2023197958
(71) Applicant: Tokai Optical Holdings Co., Ltd., Okazaki-shi, Aichi 444-2192 (JP)
(72) Inventor: TAKAHASHI Keiji, Okazaki-shi, Aichi 444-2192 (JP)
(74) Representative: Cabinet Beau de Loménie
(86) International application number: PCT/JP2024/024371
(87) International publication number: WO 2025/109794

(57) **Abstract**

To provide a shape measurement system and a shape measurement method for measuring the shape of a lens surface of an optical lens such as an eyeglass lens, an objective or ocular lens of a telescope, or a lens of a magnifying glass, etc.

[Solution Means] In a measurement system for measuring lens surface shapes of a front surface and a back surface of a lens 11, while holding the lens 11 and rotating it in a circumferential direction by a rotating holder 12, detection lights from distance sensors 15 are irradiated onto the lens surfaces that are to be measurement objects, distances are measured based on reflection lights from the lens surfaces, the distance sensors 15 are held and the distance sensors 15 are moved in a direction of traversing the lens surfaces while keeping the distances to the lens surfaces by a sensor pivoting mechanism 13, and an attitude of a holding mechanism is controlled such that the detection lights are irradiated from normal directions to the lens surfaces in association with the movement of the distance sensors 15.

## Description

### Technical Field

The present invention relates to a shape measurement system and a shape measurement method, etc., for measuring the shape of a lens surface of an optical lens such as an eyeglass lens, an objective or ocular lens of a telescope, or a lens of a magnifying glass, etc.

### Background Art

A displacement sensor has been conventionally to measure a shape of an object without contact. Although the displacement sensor measures a movement amount of the object when it moves from a certain position to another position, since a displacement amount is calculated by measuring a distance to the object, the displacement sensor is also used to measure the shape itself of the object. In other words, it is also used as a distance sensor that measures the distance to the object and as a dimension measuring instrument that measures dimensions of the object. As types of measurement by the displacement sensor, an optical type, eddy current type, ultrasonic type, laser focus type, etc., can be cited and an optimal measurement type is used in accordance with properties of the measured object, measurement precision, etc. In a measurement of a shape of a lens, since the lens is constituted of a transparent object such as glass or plastic, the optical type or the laser focus type is favorable. As an example of an art for acquiring shape data by a displacement sensor of the laser focus type, Patent Document 1 is indicated.

### Citation List

### Patent Document

Patent Document 1: Japanese Published Unexamined Patent Application No. 2018-86754

### Summary of Invention

### Technical Problem

However, when a detection light is irradiated by the displacement sensor (that is, the distance sensor) of the optical type or the laser focus type, a regular reflection light or a scattered light is not necessarily obtained at all times from a transparent object having a curved surface (curve) such as a lens, and omission or error frequently occurs in distance information and acquisition of accurate shape data is difficult. In other words, this is because, with a curved surface, the regular reflection light cannot be received unless in a normal direction or a direction close to the normal direction and the scattered light, although theoretically having a possibility of being capable of being received regardless of angle, is lowered in light amount and thus sufficient light for measurement cannot be obtained and measurement is difficult in many cases.

Additionally, despite acquisition of accurate shape data being difficult, accurate shape data of a lens is required for accurately analyzing lens characteristics. An art of accurately acquiring the shape data of the lens using an existing displacement sensor is thus demanded.

### Solution to Problem

To solve the aforementioned problem, in means 1, a measurement system for measuring a lens surface shape of at least one of either of a front surface and a back surface of a lens is configured to include a rotating mechanism that holds the lens and rotates it in a circumferential direction, a distance sensor that irradiates a detection light onto the lens surface that is to be a measurement object and measures a distance based on a reflection light of the detection light from the lens surface, a holding mechanism that holds the distance sensor, and an attitude control mechanism that moves the distance sensor in a direction traversing the lens surface while keeping the distance to the lens surface and controlling an attitude of the holding mechanism such that, in association with movement of the distance sensor, the detection light is irradiated onto the lens surface to be the measurement object from a normal direction to the lens surface that is to be the measurement object or a direction close to the normal direction.

By the above, the distance sensor is enabled to move along a curve of the lens surface while irradiating the detection light onto the lens surface from the normal direction or the direction close to the normal direction while maintaining the distance to the lens and thus the shape of the lens surface of the lens formed to a curved surface can be measured accurately using the distance sensor. Also, since the lens rotates in the circumferential direction, distance data can be acquired by scanning the lens surface widely by the movement of the distance sensor and the rotation of the lens.

With such a shape measurement system, a lens surface shape of a lens that is difficult to measure can be measured accurately using an existing distance sensor.

The term "lens" includes any transparent object on which a curved surface that converges or diverges a ray of light is formed on both surfaces or on one surface, and an eyeglass lens, a lens of a telescope or binoculars, and a lens of a magnifying glass can be cited as examples. As an eyeglass lens, not only a spherical lens but an aspherical lens and a progressive power lens are also included.

The term "rotating mechanism" in the present invention denotes a mechanism that rotates the lens using a drive unit capable of controlling a rotational position such as a servomotor or a step motor.

The term "distance sensor" denotes a sensor that measures a distance to an object (in the present invention, a transparent lens). The distance sensor is of an optical type or a laser focus type that irradiates a detection light and acquires a reflection light thereof. As a measurement method, for example, a measurement method with which the distance sensor computes the distance from a shift in phase of the reflection light or, for example, a measurement method with which a pinhole is provided at a position of receiving the reflection light to restrict a light path and the distance is computed, etc., from light of wavelength that forms an image inside the pinhole or, for example, a measurement method using an optical element such as a photodiode, a CCD (charge coupled device) sensor, or a CMOS (complementary metal oxide semiconductor) sensor, etc., is preferable. Specifically, for example, a confocal type, a PSD (position sensitive detector) type, or an imaging element configuration, etc., is preferable. Additionally, it is preferable that the reflection light is reflected regularly without diffusing. There may be one distance sensor with respect to the lens or there may be two to measure lens surfaces from both front and back surface sides.

Since the configuration is that with which the lens is rotated, the distance sensor is enabled to scan the lens surface in all directions even when, for example, the distance sensor itself moves in a rectilinear trajectory. The distance sensor held by the holding mechanism is controlled by the attitude control mechanism such that the detection light is irradiated from the normal direction to the lens surface that is to be the measurement object or the direction close to the normal direction. With the present invention, the normal direction or the direction close to the normal direction is not necessarily required to coincide strictly with a normal to a certain curved surface. This is because as long as a squarely facing state of a level such that the reflection light is reflected approximately in an emission exit direction (that is, a light receiving entrance direction) is realized, the reflection light can be acquired as distance data. The normal direction or the direction close to the normal direction thus means that it suffices to be a direction which can be admitted as being the normal direction in terms of the object of the invention.

The attitude control mechanism may, for example, be that of attitude control using an articulated robot combining a plurality of axes and may, for example, be configured with a structure that performs just a rectilinear movement of guiding along a lens curve.

Additionally, in means 2, the attitude control mechanism is made to have a configuration with a first drive unit installed with the holding mechanism and rectilinearly advancing/retreating the distance sensor and a second drive unit installed with a pivoting mechanism and rectilinearly advancing/retreating the pivoting mechanism, the first drive unit being installed on the pivoting mechanism, advancing and retreating directions of the distance sensor and advancing and retreating directions of the pivoting mechanism being placed in parallel, a pivoting radius of the pivoting mechanism being adjusted by changing a distance from a pivoting center of the pivoting mechanism to the distance sensor by advancing/retreating the pivoting mechanism and the pivoting mechanism being controlled at the adjusted pivoting radius to make the distance sensor pivot on a curve corresponding to a curvature of the curve of the lens surface, and an interval between the lens that is placed at a fixed position and the distance sensor being maintained by moving the distance sensor in a direction opposite a movement direction of the pivoting mechanism and by the same or an approximately same movement amount as a movement amount of the pivoting mechanism when it advances/retreats.

The configuration is an example of the attitude control mechanism and is for favorably acquiring distance data by the distance sensor from the normal direction or the direction close to the normal direction. The distance sensor can thereby scan the lens surface by just rectilinearly traversing the lens surface. The pivoting mechanism is advanced/retreated by the second drive unit and the further away from the pivoting center of the pivoting mechanism, the greater the pivoting radius and the more a gradual the curve on which pivoting is performed and the closer to the pivoting center, the sharper the curve on which pivoting is performed.

The "pivoting mechanism" pivots the first drive unit on a basis of the rotational center of the pivoting mechanism using a drive unit capable of controlling a rotational position such as a servomotor or a step motor. The pivoting may be performed, for example, not just in the same direction but also as a reciprocation in a swinging manner. In pivoting the distance sensor, an interval must be provided such that the distance sensor does not contact the lens surface. Although this interval is calculated from the adjusted pivoting radius, coordinates of the lens surface, and coordinates of the distance sensor and simulation such that contact does not occur is easy, it does not have to be of such strict numerical value as long as a distance is provided to some degree from the lens surface to the distance sensor.

The "first drive unit" and the "second drive unit" are preferably, for example, electric actuators capable of controlling a position. The "pivoting mechanism" is preferably, for example, a disk-like frame, etc., that is mounted to a rotating shaft of a motor that is controllable and includes a reduction gear mechanism.

Additionally, in means 3, the distance sensor is made to move such as to traverse between a center and an outer circumference of the lens surface.

This is because the entire lens surface can thereby be scanned with the least movement amount of the distance sensor. In traversing, it is to preferable to move rectilinearly.

Additionally, in means 4, the distance sensors are respectively placed at positions facing the lens surfaces at the front and the back of the lens such as to sandwich the lens and are configured such that the lens surface shapes at the front and the back of the lens are measured at the same time by the different distance sensors respectively.

Since both the front and the back surfaces of the lens can thereby be measured at the same time, a measurement error is lessened and the lens shape can be acquired more accurately.

Additionally, in means 5, a calculating means that calculates the shape of the lens surface based on distance data at a plurality of points on the lens surface obtained by scanning by the lens that is rotating and the distance sensor that is moving such as to traverse the lens surface relatively is provided.

By performing calculation by the calculating means of means 5 based on the distance data acquired by the means described above, the shape of the lens surface can be obtained. For example, as the calculation means, a calculation means of the same computer unit as any means among the means 1 to 4 may be used to perform the computation or the distance data obtained by any means among the means 1 to 4 may be subject to computation using a calculation means of, for example, another computer unit.

When "based on the distance data" is mentioned, the shape of the lens surface may be specified by just the acquired distance data or the shape of the lens surface may be specified by performing, based on the distance data, interpolation computation of regions between the distance data.

Additionally, in means 6, the rotating mechanism includes a rotating portion that rotates together with the lens and a holding portion that holds the rotating portion and one or a plurality of a second distance sensor are disposed at the holding portion side and measurement of a distance to a target at the rotating portion side is enabled and when the distance measured in association with rotation of the rotating portion changes, the distance data of the lens surface is corrected based on a amount of change measured by the second distance sensor.

Additionally, in means 7, the rotating mechanism includes a rotating portion that rotates together with the lens and a holding portion that holds the rotating portion and one or a plurality of a second distance sensor are disposed at the rotating portion side and measurement of a distance to a target at the holding portion side is enabled and when the distance measured in association with rotation of the rotating portion changes, the distance data of the lens surface is corrected based on a amount of change measured by the second distance sensor.

A rotational deviation resulting from the rotation of the lens in the circumferential direction is thereby detected (measured) as the change in distance between the rotating portion and the holding portion and since rotational deviation is occurring when the distance changes, the distance data of the lens surface can be corrected based on the amount of change and accurate measurement of the lens surface shape is made possible. The difference between the means 6 and the means 7 is the difference of whether the second distance sensor is disposed on the holding portion or disposed on the rotating portion. This is especially effective, for example, when, in a case of a configuration in which the rotating portion is turned by engaging gears, vibration or inclination such that causes the rotating portion to shake up and down acts at times due to various factors such as vibration of the gears, backlash of the gears, processing error, etc.

Although, as the "second sensor," the same specific sensor as the "distance sensor" described above can be used, in order to acquire a slight change in the slight distance between the rotating portion and the holding portion, it is preferable to use, for example, an electrostatic sensor or a confocal type sensor, and the distance (gap) between the rotating portion and the holding portion suffices to be approximately 0.1 to 1 mm and is preferably approximately 0.5 mm.

A theory of detecting the change in the distance (interval) between the rotating portion and the holding portion by a plurality of the second distance sensors is such as follows. When there is rotational deviation when the rotating part rotates, a case arises where the distance to the holding portion varies in accordance with phase and by acquiring this amount of change of distance, for example, as an inclination angle with respect to the holding portion and performing a coordinate transformation, for example, by a rotational vector or a rotational matrix, etc., based on the angle, movement to a position for the case where there is no rotational deviation can be performed.

Also, with three or more second distance sensors, since the position of each sensor is determined based on three-dimensional coordinates and a plane on which the second distance sensors are present is determined based on the coordinates, calculation can be performed by performing a coordinate transformation, for example, by a rotational vector or a rotational matrix, etc., based on how the plane on which the second distance sensors are present intersects a planar direction of the rotating portion that is orthogonal to a *rotating shaft*.

Additionally, in means 8, two of the second distance sensors are placed at positions facing each other at 180 degrees across a rotational center of the lens and the amount of change of the distance is acquired based on a difference in measurement values of the two second distance sensors.

A parameter of inclination can thereby be obtained easily.

Additionally, in means 9, the distance sensor is moved along a segment joining the two second distance sensors such as to traverse between the center and the outer circumference of the lens surface.

When the two second distance sensors are at such positions, the difference in measurement values can be used as it is as the parameter of inclination in the measurement direction, the need to correct to the inclination in the movement direction of the distance sensor is eliminated, and the calculation of a correction value is made easy.

Additionally, in means 10, a surface to be the target of the second distance sensor is made to be a flat surface constituting a ring shape placed along an outer circumferential shape of the lens.

When the surface to be the target is thus the plane constituting the ring shape, an interval between the second distance sensor and the target can be kept fixed easily during orbiting and therefore, computation of the correction value is made easy.

Additionally, means 11 provides a method for measuring a lens surface shape of at least one of either of a front surface and a back surface of a lens, the method including the steps of using a distance sensor that irradiates a detection light onto a measurement object and measures a distance to the measurement object based on a reflection light of the detection light from the lens surface, placing the distance sensor such that the detection light is irradiated from a normal direction to the lens surface that is the measurement object or a direction close to the normal direction, scanning the lens surface by the distance sensor in such a placement state and acquiring distance data at a plurality of points on the lens surface, and calculating the shape of the lens surface based on the plurality of distance data obtained.

By the above, movement can be performed along a curve of the lens surface while irradiating the detection light onto the lens surface from the normal direction or the direction close to the normal direction while maintaining the distance to the distance sensor lens and thus the shape of the lens surface of the lens formed to a curved surface can be measured accurately using the distance sensor. Also, the distance data can be acquired by scanning the lens surface widely and the shape of the lens surface can be calculated.

With such a shape measurement system, a lens surface shape of a lens that is difficult to measure can be measured accurately using an existing distance sensor. Unlike with the means 1, with this means 11, the lens does not have to be rotating, and, for example, the lens surface may be scanned by installing the distance sensor on a multi-axis robot. The meaning of the normal direction or the direction close to the normal direction is the same as described above.

Also, three-dimensional data of the plurality of distance data obtained by the distance data are preferably transformed to planar distances from an optical axis, for example, positions specified on x-y plane coordinates by projection of the lens surface on a plane intersecting the optical axis, in particular, two-dimensional direction data on a plane orthogonal to the optical axis.

Additionally, in means 12, control is performed such that the lens rotates in a circumferential direction and the distance sensor pivots along the curve of the lens surface in a direction intersecting the lens in a state in which the detection light is irradiated onto the lens surface from the normal direction or the direction close to the normal direction.

By thus rotating the lens and thus pivoting the distance sensor, scanning of the whole lens surface can be performed efficiently.

Additionally, in means 13, control is performed such that when the distance sensor pivots, it does not interfere with the lens surface of the lens.

This is because acquisition of the distance data is hindered when the distance sensor interferes with the lens surface when the distance sensor pivots with respect to the lens surface. It is thus necessary to set a pivoting radius such that the distance sensor does not interfere with the lens surface. Specifically, for example, in setting the pivoting radius of the distance sensor, it is preferable to adjust a position of the distance sensor and a position of the lens such that the distance sensor is located further outward than a position at which a normal to a locus of a circle of the pivoting radius intersects the lens surface.

Additionally, in means 14, the distance sensors are respectively placed at positions facing the lens surfaces at the front and the back of the lens such as to sandwich the lens and are configured such that the lens surface shapes at the front and the back of the lens are measured at the same time by the different distance sensors respectively.

Since both the front and the back surfaces of the lens can thereby be measured at the same time, a measurement error is lessened and the lens shape can be acquired more accurately.

Additionally, in means 15, the detection light irradiated from the distance sensor is configured to be a coherent light.

By using the coherent light as the detection light, more accurate detection is enabled. The coherent light is, for example, a laser light or a maser light.

Additionally, in means 16, the lens is controlled such as to rotate in the circumferential direction and stop temporarily at each predetermined rotation angle, the distance sensor in a state of being made to squarely face the lens surface is controlled, when the lens stops temporarily, to move in a diameter direction of the lens surface, and the distance data are acquired at the plurality of points in association with the movement.

This is a claim of a specific and efficient technique for scanning the lens. The lens is scanned by stopping it at a predetermined phase position and moving the distance sensor in the diameter direction of the lens and by making the lens and the distance sensor operate thus, the distance data can be acquired by scanning the whole lens surface uniformly in a well-balanced manner.

Additionally, in means 17, the distance sensor in the state of being made to squarely facing the lens surface is controlled to stop at an arbitrary plurality of stop positions during movement in the diameter direction of the lens and the lens is controlled to rotate at each stop position of the distance sensor to acquire a plurality of the distance data.

This is also a claim of a specific and efficient technique for scanning the lens. In making the lens and the distance sensor operate thus, by rotating the lens, the lens surface is scanned in concentric circles by the distance sensor that stops at the predetermined positions in the diameter direction of the lens and the distance data can be acquired by scanning the whole lens surface uniformly in a well-balanced manner.

Additionally, in means 18, a rotational deviation of a rotating portion that rotates together with the lens is measured by a second distance sensor, which measures a distance from a holding portion side that holds the rotating portion with the rotating portion side being a target, and when the measured distance changes in association with the rotation of the rotating portion, the amount of change is used as a correction value to correct the distance data and calculate the shape of the lens surface.

Additionally, in means 19, a rotational deviation of a rotating portion that rotates together with the lens is measured by a second distance sensor that is disposed on the rotating-portion side and measures a distance with a holding portion side that holds the rotating portion being a target, and when the measured distance varies in association with rotation of the rotating portion, the amount of change is used as a correction value to correct the distance data and calculate the shape of the lens surface.

Thereby, when a rotational deviation results from the rotation of the lens in the circumferential direction, the rotational deviation is detected (measured) as the change in distance between the rotating portion and the holding portion and since rotational deviation is occurring when the distance changes, the distance data of the lens surface can be corrected based on the amount of change and accurate measurement of the lens surface shape is made possible. The difference between the means 18 and the means 19 is the difference of whether the second distance sensor is disposed on the holding portion or disposed on the rotating portion. This is especially effective, for example, when, in a case of a configuration in which the rotating portion is turned by engaging gears, vibration or inclination such that causes the rotating portion to shake up and down acts at times due to various factors such as rotational deviation of a bearing, vibration of the gears, backlash of the gears, processing error, etc.

Additionally, in means 20, two of the second distance sensors are placed at positions facing each other at 180 degrees across a rotational center of the lens and the amount of change of the distance is acquired based on a difference in measurement values of the two second distance sensors.

A parameter of inclination can thereby be obtained easily.

Additionally, in means 21, the distance sensor is moved along a segment joining the two second distance sensors such as to traverse between the center and the outer circumference of the lens surface.

When the two second distance sensors are at such positions, the difference in measurement values can be used as it is as the parameter of inclination in the measurement direction, the need to correct to the inclination in the movement direction of the distance sensor is eliminated, and the computation of a correction value is made easy.

The inventions illustrated by the respective means described above can be arbitrarily combined. For example, at least part of the configuration of at least one of the inventions of the means 2 and subsequent means may be added to the whole or part of the configuration of the invention illustrated by the means 1. In particular, at least part of the configuration of at least one of the inventions of the means 2 and subsequent means is preferably added to the invention shown in the means 1. Also, arbitrary configurations may be extracted from the inventions illustrated by the means 1 to the means 21, and the extracted configurations may be combined. The applicant of the present application has the intention to acquire the rights to the inventions including these.

### Advantageous Effects of Invention

According to the present invention, a lens surface shape of a lens that is difficult to measure can be measured accurately using an existing distance sensor. Brief Description of Drawings
[FIG. 1] A schematic view for describing an outline of principal portions of a shape measurement system for lens in a first embodiment of the present invention.
[FIG. 2](a) is a schematic view of a state in which an auxiliary actuator with respect to a main actuator is at a reference position in the shape measurement system for lens of the first embodiment and (b) is likewise a schematic view showing a state during pivoting of the auxiliary actuator with respect to the main actuator.
[FIG. 3](a) is a schematic view of principal parts of a sensor pivoting mechanism in a state in which a pivoting radius of a distance sensor is small and (b) is a schematic view of the principal parts of the sensor pivoting mechanism in a state in which the pivoting radius of the distance sensor is large.
[FIG. 4] An explanatory view for describing a geometric positional relationship when projecting positions of a lens back surface detected by the distance sensor in the first embodiment onto plane coordinates.
[FIG. 5] An explanatory view for describing a geometric positional relationship when projecting positions of a lens back surface detected by the distance sensor in the first embodiment onto plane coordinates.
[FIG. 6] A schematic view showing a position on x-y plane coordinates of a lens in terms of distance and angle.
[FIG. 7] A block diagram for explaining an electrical configuration in the first embodiment.
[FIG. 8] A schematic view for describing an outline of principal portions of a shape measurement system for lens in a second embodiment of the present invention, of two electrostatic sensors.
[FIG. 9] A partially cutaway end face view for describing a specific configuration of a lens rotating mechanism in a third embodiment of the present invention.
[FIG. 10] A plan view of the lens rotating mechanism of the same third embodiment.
[FIG. 11] A block diagram for explaining an electrical configuration in the third embodiment.
[FIG. 12] An explanatory view for describing a geometric positional change of a lens when viewed in a direction orthogonal to a pivoting direction in performing a coordinate transformation of a measurement position based on an angle obtained by an electrostatic sensor in an embodiment.
[FIG. 13] A schematic view for describing a technique for calculating a deviation amount with respect to a horizontal line based on rotational deviations of two electrostatic sensors.

### Description of Embodiments

Hereinafter, embodiments of the present invention shall be described based on the drawings.

### (First Embodiment)

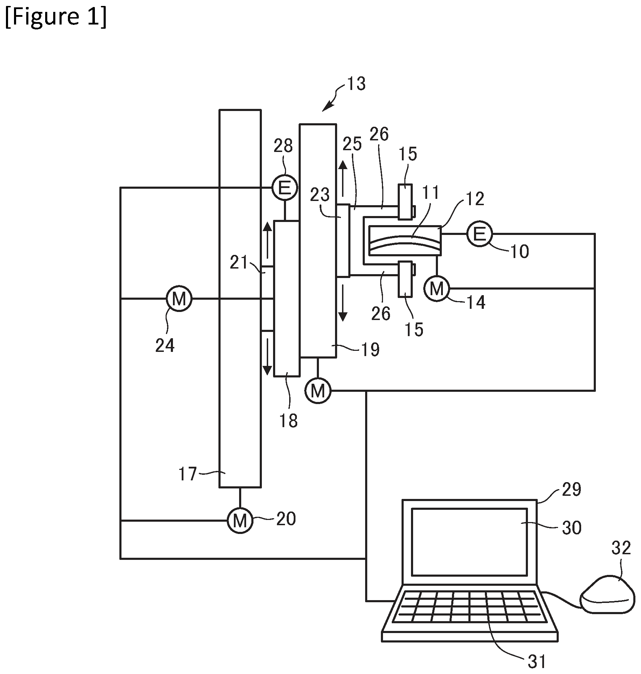

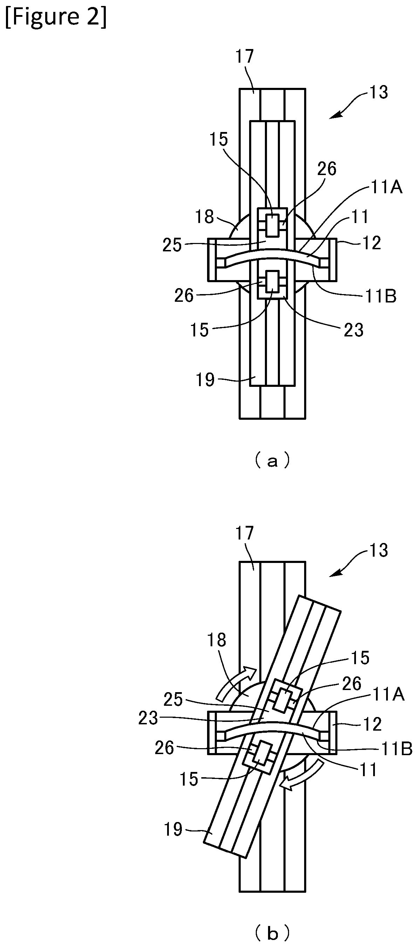

FIG. 1 and FIG. 2 are schematic views for describing an outline of principal portions of a shape measurement system for lens of the present embodiment. The shape measurement system for lens includes a rotating holder 12 that houses an eyeglass lens 11 that is to be a measurement object and a sensor pivoting mechanism 13. Here, description of components that are directly irrelevant to the present invention shall be omitted. First, the rotating holder 12 side shall be described.

Although the rotating holder 12 is placed rotatably on a table, since, with the present first embodiment, a main point is to describe the outline of the principal portions, illustration of the table is omitted. With the eyeglass lens 11, lens surfaces 11A and 11B are disposed such that an optical axis extends in a vertical direction with respect to the rotating holder 12 (that is, the lens surfaces 11A and 11B are disposed in an up/down direction). The eyeglass lens 11 is fixed inside the rotating holder 12 by being pressed in a center direction from a lens peripheral edge by a jig such as not to be a hindrance to measurement. The eyeglass lens 11 that is to be the measurement object in the first embodiment is a lens commonly called a "round lens" that has an outer circumference of circular shape prior to lens shape machining and has an outer shape of meniscus shape and disk shape.

The rotating holder 12 is housed inside an unillustrated ring gear and is placed rotatably on the table by being integrated with the ring gear. A rotational center of the rotating holder 12 coincides with a center of the rotating holder 12, that is, a geometric center of the eyeglass lens 11. The ring gear is engaged with an unillustrated pinion that is likewise placed on the table and a first motor unit 14 is connected to the pinion. By driving of the first motor unit 14, the rotating holder 12 is rotated via the pinion and the gear and the eyeglass lens 11 is rotated in a circumferential direction together with the rotating holder 12. A first rotary encoder 10 is provided adjacent to the rotating holder 12 and detects a rotational position of the rotating holder 12, that is, a phase of the eyeglass lens 11. A lens rotating mechanism is configured by the rotating holder 12, the ring gear, the pinion, the first motor unit 14, the table, etc.

Next, the sensor pivoting mechanism 13 shall be described.

The sensor pivoting mechanism 13 is disposed at a position adjacent to the rotating holder 12. The sensor pivoting mechanism 13 includes distance sensors 15, and by the sensor pivoting mechanism 13, the distance sensors 15 are displaced in positions with respect to the rotating lens surfaces 11A and 11B and thereby made to scan the lens surfaces 11A and 11B of the eyeglass lens 11 and acquire distance data. As each of the distance sensors 15 of the present first embodiment, a confocal type sensor of a type that, by a multi-lens optical system, irradiates white light (polychromatic light) from an emission exit and forms an imaging point on a target surface (lens surface) is used.

The sensor pivoting mechanism 13 includes a main actuator 17 and an auxiliary actuator 19 that is supported by the main actuator 17 via a pivoting table 18. The main actuator 17 is an electric actuator and includes a slide table 21 that is driven by an incorporated second motor unit 20 to slidingly move rectilinearly in a length direction. The auxiliary actuator 19 is also an electric actuator and includes a slide table 23 that is driven by an incorporated third motor unit 22 to slidingly move rectilinearly in a length direction. The main actuator 17 and the auxiliary actuator 19 both include an unillustrated screw rod that converts a force in a rotational direction of the motor to a force in a rectilinear direction and the slide table 21 (23) is moved by rotation of the screw rod. Also, semi-closed looped control with which angles of motor shafts of the motor units 20 and 22 are detected by incorporated encoders is performed. The pivoting table 18 disposed between the main actuator 17 and the auxiliary actuator 18 includes a fourth motor unit 24 to which the pivoting table 18 is axially supported rotatably. The fourth motor unit 24 is fastened onto the slide table 21 of the main actuator 17 and rotates the pivoting table 18 on the slide table 21. A second rotary encoder 28 is provided adjacent to the pivoting table 18 and detects a rotational position of the pivoting table 18, that is, phases of the distance sensors 15 with respect to the eyeglass lens 11. A side surface of the pivoting table 18 is fastened to a rear surface side of the auxiliary actuator 19 and when the pivoting table 18 rotates, the auxiliary actuator 19 pivots together with the pivoting table 18.

A sensor holder 25 is fastened to the slide table 23 of the auxiliary actuator 19. The sensor holder 25 includes a pair of arms 26 and the distance sensors 15 are respectively mounted to each of the arms 26. The pair of distance sensors 15 are placed such that the mutual emission exits for white light face each other squarely. The distance sensors 15 are placed at positions above and below the eyeglass lens 11 held by the rotating holder 12 while keeping distances to the eyeglass lens 11 and sandwiching the eyeglass lens 11 in between.

As shown in FIG. 1, the shape measurement system includes a computer unit 29. The computer unit 29 includes a monitor unit 30, a keyboard 31 as an input means, and a mouse 32 as an input means.

In such a configuration, advancing and retreating directions of the slide table 21 of the main actuator 17 and the slide table 23 of the auxiliary actuator 19 of the sensor pivoting mechanism 13 are placed in parallel as shown in FIG. 1. Therefore, for example, when the slide table 21 of the main actuator 17 and the slide table 23 of the auxiliary actuator 19 move by equal amounts in mutually opposite directions, the rotating holder 12 does not move and is always placed at a fixed position.

As shown in FIG. 2(a), a state in which length directions of housings of the main actuator 17 and the auxiliary actuator 19 that are placed adjacent to the eyeglass lens 11 placed such that the optical axis is in the vertical direction are placed in the vertical direction shall be a pivoting reference position of the sensor pivoting mechanism 13 and at this pivoting reference position, a center of the emission exits of the distance sensors 15 is placed at the geometric center of the eyeglass lens 11. At this position, emission exit directions of white light of the distance sensors 15 coincide with the optical axis direction.

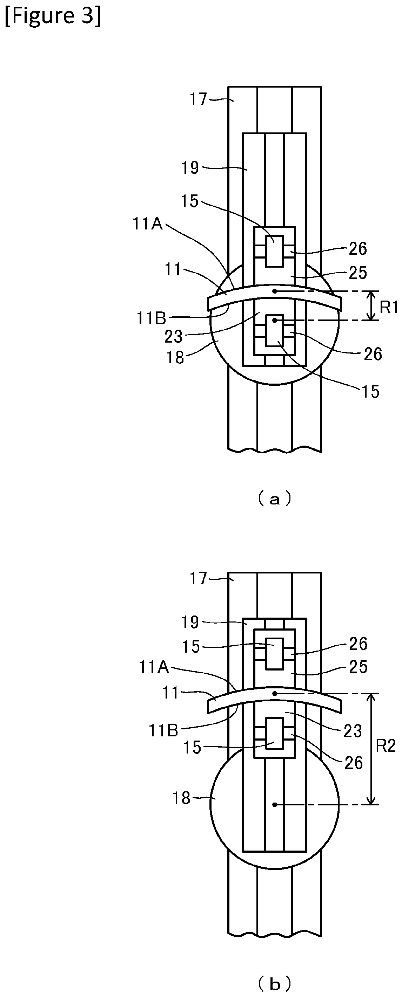

When the pivoting table 18 rotates from the state of FIG. 2(a), the distance sensors 15 pivot together with the auxiliary actuator 19 such that the light exit directions of white light are oriented in substantially normal directions as shown in FIG. 2(b). That is, the distance sensors 15 pivot in synchronization with a phase change of the pivoting table 18 such as to move in curves along curves on the lens surfaces 11A and 11B of the eyeglass lens 11. In this process, curvatures of the curves change in accordance with a pivoting radius of the sensor holder 25. The pivoting radius is such that, on a basis of a center O of the pivoting table 18 (that is, rotating shaft position of the fourth motor unit 24), the longer the pivoting radius, the more gradual the curves. When a reference point through which a locus of a circle of the pivoting radius from the center O passes is a middle position of the pair of distance sensors 15, in FIG. 3(a), curves drawn by loci of the distance sensors 15 are sharp because the pivoting radius r1 is short. On the other hand, with FIG. 3(b), since the slide table 23 of the auxiliary actuator 19 has moved upward and has separated from the center O of the pivoting table 18, the pivoting radius R2 in this case is longer than the pivoting radius R1 and the curves drawn by the loci of the distance sensors 15 are gradual. Since in association with the upward moving of the slide table 23 of the auxiliary actuator 19, the slide table 21 of the main actuator 17 moves by an equal amount in the opposite direction, there is no apparent change in positions of the distance sensors 15 with respect to the eyeglass lens 11.

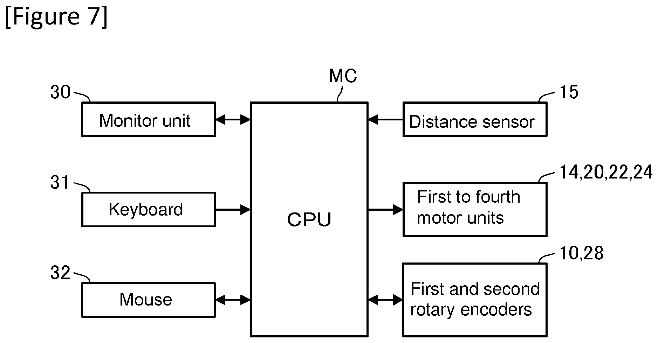

Next, an electrical configuration of the computer unit 29 shall be described based on a block diagram of FIG. 7. Here, components that are not directly relevant to the present invention shall be omitted.

The distance sensors 15, the first to fourth motor units 14, 20, 22, and 24, the first and second rotary encoders 10 and 28, the monitor unit 30, the keyboard 31, the mouse 32, etc., are respectively connected via an unillustrated interface to a controller MC of the computer unit 29.

As a control means and a calculation means, the controller MC is configured from a known CPU, a ROM, RAM, or other memory, a timer, etc. A data acquisition program that makes the distance sensors 15 acquire the distance data at a predetermined timing and save the acquired distance data, a position control program for controlling advance amounts and advance directions of the slide tables 21 and 23 of the main actuator 17 and the auxiliary actuator 19, a position control program that controls a rotational speed of the pivoting table 18 and its position based on a phase change amount when it rotates, a position control program that makes the rotating holder 12 rotate and controls its position from a phase change amount when it rotates, a computation program that calculates the pivoting radius based on lens curve data that has been input and computes the advance amounts of the slide tables 21 and 23 based on the calculated pivoting radius, an operation program that controls an operation timing of the pivoting of the distance sensors 15 in accordance with the rotation of the rotating holder 12 and the rotation of the pivoting table 18, a computation program for performing a computation of transforming the distance data on the lens surfaces 11A and 11B to plane coordinates of the lens, shape data (size of the lens, curvature and curve value of base curve, etc.) of the eyeglass lens 11, etc., are stored in the ROM inside the controller MC.

The distance data acquired by the distance sensors 15, coordinate data resulting from transformation onto plane coordinates, etc., are temporarily stored in the RAM inside the controller MC.

Next, a specific control technique for shape measurement of a lens surface by the present system that is executed by the controller MC shall be described. In the present first embodiment, two techniques (MODE 1 and MODE 2) that differ in a rotation timing of the rotating holder 12 and a pivoting timing of the distance sensors 15 are prepared as an example. First, MODE 1 shall be described. A. Input of numerical values in accordance with lens curves

A worker uses the keyboard 31 and the mouse 32 to input, on the screen of the monitor unit 30, numerical values of base curves of the lens that is the measurement object. In the present first embodiment, for the numerical value of the base curves, curvatures in a vicinity of a lens vertex are measured in advance and these are used as curvatures of the base curves. The controller MC calculates the pivoting radius of the distance sensors 15 in accordance with the numerical values of the base curves. The locus of the circle of the pivoting radius is set at the middle position of the pair of distance sensors 15 from the center of the pivoting table 18 (the pivoting center O) and the third motor unit 22 is driven in accordance with the predetermined pivoting radius. Here, in regard to the normal direction, a precise angle is not necessary as long as reflection lights can reach internal light receiving portions from the emission exits. That is, when the distance sensors 15 pivot, emission directions of detection lights suffice to be approximately normal directions to the lens surfaces and here, allowable deviations in angle from the normal directions are not constant according to the distance sensors 15 since these depend on diameters of the emission exits and distances to the light receiving portions.

B. Operations of the rotating holder and the distance sensors

In MODE 1, the controller MC executes control such as follows.
1. The controller MC controls the first motor unit 14 to make the rotating holder 12 rotate in a clockwise direction while making it stop temporarily at a predetermined phase position. The stop position of the rotating holder 12 is computed based on a detection signal of the first rotary encoder 10 as a rotation sensor. In the present first embodiment, for example, a single turn of 360 degrees is divided at step angles of 30 degrees to set a total of twelve measurement points. Since the rotating holder 12 and the eyeglass lens 11 as a workpiece are concentric, the eyeglass lens 11 stops at 30-degree steps while rotating. With a certain rotation reference position of the eyeglass lens 11 as 0 degrees (point 1), the controller MC performs, in 2., stop control of the rotating holder 12 at each of point 1 to point 12 while the distance sensors 15 perform a single reciprocation.
2. On the other hand, the controller MC controls the fourth motor unit 24 to make the pivoting table 18 rotate and make the distance sensors 15 installed on the auxiliary actuator 19 pivot along the eyeglass lens 11. In the present first embodiment, the distance sensors 15 are, in a initial state, placed at the pivoting refence position, that is, at the geometric center of the eyeglass lens 11. Since in MODE 1, the distance sensors 15 are made to scan such as to traverse in a diameter direction of the eyeglass lens 11, the controller MC performs a control of moving the distance sensors 15 once to an end position of the eyeglass lens 11 at this point.

Since a pivoting phase operation of the distance sensors 15 and a rotation phase operation of the pivoting table 18 are synchronized, a pivoting position of the distance sensors 15 is calculated based on a detection signal of the second rotary encoder 28 as a rotation sensor. The controller MC controls the fourth motor unit 24 based on the shape data of the eyeglass lens 11 and the detection signal from the second rotary encoder 28 to make the pivoting table 18 rotate in a counterclockwise direction and place the distance sensors 15 at the end position of the eyeglass lens 11. The fourth motor unit 24 is then controlled to make the distance sensors 15 pivot such as to traverse in the diameter direction and stop at an opposing end position of the eyeglass lens 11 based on the shape data of the eyeglass lens 11 and the detection signal from the second rotary encoder 28.

At a timing of the next 30-degree step, the controller MC performs drive control of the fourth motor unit 24 in a reverse direction such as to make the distance sensors cross in an opposite direction (that is, a starting point direction). Control is then performed such as to repeat this reciprocation a total of twelve times in synchronization with the rotation of 30-degree step of the rotating holder 12. That is, the controller MC controls the driving of the fourth motor unit 24 such that the distance sensors 15 crosses upon reversing alternately at odd number points and even number points.

### C. Acquisition of distance data

1. At each point of 30-degree step in B.1., the controller MC controls the first motor unit 14 to make the rotating holder 12 stop temporarily and, in each of these stoppage states, controls the fourth motor unit 24 to make the distance sensors 15, placed at the end position of the eyeglass lens 11, pivot such as to cross in the diameter direction as in B.2., and acquires the distance data in the diameter direction by the distance sensors 15 at each step angle. In this process, with respect to the curved lens surfaces 11A and 11B, the emission directions of the detection lights of the distance sensors 15 transition while maintaining approximately normal directions to the lens surfaces.

Since the position of the distance sensors 15 in the diameter direction depends on a rotation angle of the pivoting table 18 (that is, since the pivoting angle of the distance sensors 15 is the rotation angle of the pivoting table 18 itself), the controller MC performs a saving process upon associating the distance data measured by the distance sensors 15 at the predetermined rotation angle (pivoting angle) according to the second rotary encoder 28 with a measurement angle. In MODE 1, for example, ten distance data are acquired and saved at equal intervals in the diameter direction of the eyeglass lens 11.

The acquisition of the distance data is performed at the same time for the lens surfaces 11A and 11B of the eyeglass lens 11. In this process, since the pair of distance sensors 15 are always at the same interval, the movement is such that advancement of one results in retraction of the other. Since the eyeglass lens 11 is a meniscus lens and the front and back surface curves are thus opposite of each other in convexness/concaveness, the detection lights can be irradiated from approximately normal directions onto both of the lens surfaces 11A and 11B.

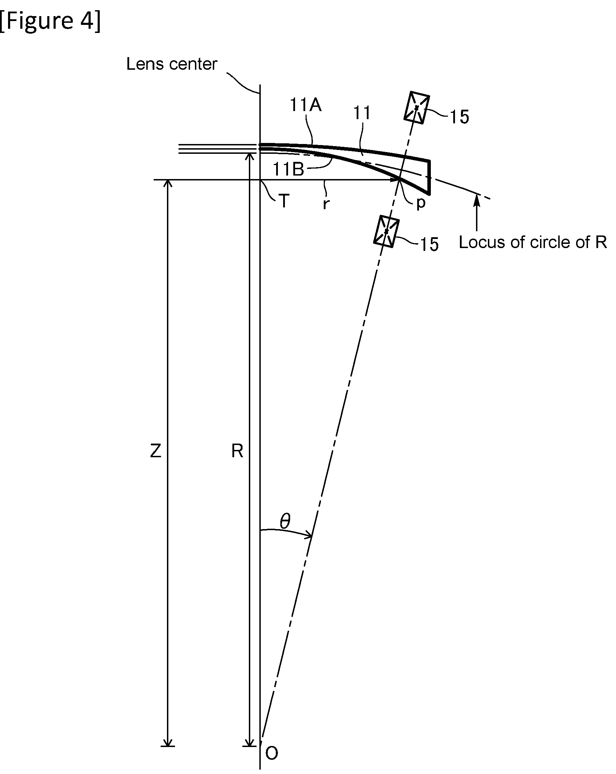

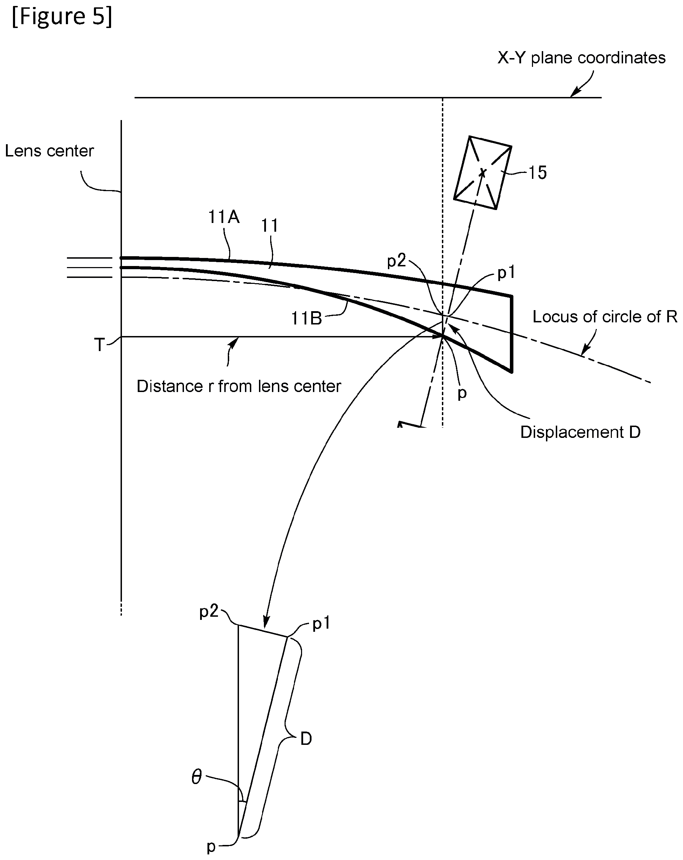

2. In B.3., ten distance data can be acquired for each of twelve directions at 30-degree intervals for the front and back lens surfaces 11A and 11B of the eyeglass lens 11. Although these data can be used directly as the shape data of the measurement object lens, since the points are on the curved surfaces of the lens, it is advantageous in terms of handling to project these onto a plane and perform transformation to planar data. A transformation theory according to which the controller MC performs saving of the distance data upon performing transformation onto plane coordinates shall be described based on FIG. 4 and FIG. 5.

Here, in regard to the lens surface 11B that is the back surface of the eyeglass lens 11, a case where a position p, for which the distance has been measured by the distance sensor 5, is projected onto plane coordinates shall be considered. A point at which the position p, for which the pivoting angle is θ, intersects, on the optical axis of the detection light, a locus of a circle of a pivoting radius R shall be p1 and a distance from the position p to the point p1 shall be a displacement D. Also, when a point at which a perpendicular line from the position p that is orthogonal to x-y plane coordinates and the pivoting radius R is p2, a right triangle joining p, p1, and p2 such as shown in FIG. 5 is formed. This triangle is similar to a right triangle joining the pivoting center O, the position p, and T (an intersection of a horizontal line passing through the position P and a perpendicular line passing through the lens center). When, from these relationships, a distance in a horizontal direction from the lens center to the position p is r (the distance between T and p) and a height from the pivoting center O to the horizontal line passing through the position p is z, three-dimensional position data of the position p are as follows. $r = \left(R-D\right) sinθ$ $z = \left(R-D\right) cosθ$

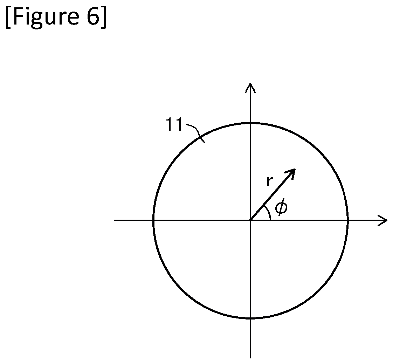

As shown in FIG. 6, in the eyeglass lens 11 projected onto the x-y plane coordinates, the position p is indicated by a horizontal line r and an angle ϕ at which stop control at the step angle of 30 degrees is performed and therefore, the position in an x-axis direction and a Y-axis direction can be determined by acquiring angle data as appropriate by the first rotary encoder 10 and using trigonometric functions.

Next, MODE 2 shall be described. In MODE 2, the controller MC executes control such as follows.

### A. Input of numerical values in accordance with lens curves

This is the same as in MODE 1.

### B. Operations of the rotating holder and the distance sensors

In MODE 2, the controller MC executes control such as follows.
1. The controller MC controls the fourth motor unit 24 to make the pivoting table 18 rotate and make the distance sensors 15 installed on the auxiliary actuator 19 pivot along the eyeglass lens 11. The controller MC controls the pivoting reference position, that is, the fourth motor unit 24 to rotate the pivoting table 18 and make the distance sensors 15 pivot such as to cross in the radial direction from the geometric center of the eyeglass lens 11. In this process, stop control of the fourth motor unit 24 is performed such that the distance sensors 15 stop temporarily at predetermined positions (intervals). Since the pivoting position of the distance sensors 15 is calculated based on the detection signal of the second rotary encoder 28 as the rotation sensor, for example, in a case where movement - stoppage - movement is repeated at intervals each of a movement amount of 3 mm in the diameter direction, control is performed such that the fourth motor unit 24 is stopped temporarily based on the detection signal from the second rotary encoder 28 for which a displacement amount corresponds to 3 mm.
2. On the other hand, the controller MC controls the first motor unit 14 to make the rotating holder 12 rotate in the clockwise direction. With the stopping of the fourth motor unit 24 in B.1. as a trigger, the controller MC starts the driving of the first motor unit 14 and when it determines based on the detection signal of the first rotary encoder 10 that the rotating holder 12 has rotated for the single turn of 360 degrees, stops the driving of the first motor unit 14. With the stopping of the driving of the first motor unit 14 as a trigger, the controller MC performs control such as to drive the fourth motor unit 24 again to make the pivoting table 18 rotate and move and stop the distance sensors 15 to and at the next position again. In MODE 2, the movement - stoppage - movement is repeated up to a position set in advance that is in accordance with the diameter of the eyeglass lens 11 and the distance sensors 15 are gradually moved outward. And each time the distance sensors 15 stop, the first motor unit 14 is controlled to make the rotating holder rotate by 360 degrees in the clockwise direction. When it is determined based on the detection signal of the second rotary encoder 28 that the distance sensors 15 have reached the end position of the eyeglass lens 11, the fourth motor unit 24 is controlled to make the pivoting table 18 return to the pivoting reference position.

### C. Acquisition of distance data

1. At the timing of stoppage of the distance sensors 15 at each movement amount of 3 mm in B.1., the controller MC makes the eyeglass lens 11 rotate and acquires distance data in the circumferential direction. In this process, with respect to the curved lens surfaces 11A and 11B, the emission directions of the detection lights of the distance sensors 15 transition while maintaining approximately normal directions to the lens surfaces. The distance data are acquired at each of the turns that form concentric circles. The controller MC performs the saving process upon associating the distance data measured by the distance sensors 15 at the predetermined rotation angle (pivoting angle) according to the second rotary encoder 28 with the measurement angle. For example, twelve distance data are acquired and saved at equal intervals in the circumferential direction of the eyeglass lens 11 in MODE 2 as well. In regard to saving the acquired distance data upon transformation onto plane coordinates, since this is performed in the same manner as described above, description thereof shall be omitted. The acquisition of the distance data is performed at the same time for the lens surfaces 11A and 11B of the eyeglass lens 11.

### By having the configuration such as described above, effects such as the following are exhibited by the first embodiment.

(1) Since in performing the shape measurement of the lens surface, the measurement can be performed from the normal direction or the direction close to the normal direction, the reflection light of the white light irradiated from each distance sensor 15 can be received reliably, omission and erroneous detection regarding the distance data are lessened, and accurate measurement of the lens shape can be performed.
(2) Since the pivoting radius when the distance sensors 15 pivot in accordance with the lens curves can be changed and the lens surfaces can thus be scanned in curves that are as close as possible in curvatures of the lens while being directed in the normal direction or the direction close to the normal direction, the reflection light of the white light irradiated from each distance sensor 15 can be received reliably, omission and erroneous detection regarding the distance data are lessened, and accurate measurement of the lens shape can be performed.
(3) Since a structure is realized with which the distance sensors 15 are pivoted along the lens curves by the two actuators 17 and 19 that move rectilinearly and the pivoting table 18 and the pivoting radius when the distance sensors 15 pivot can be changed, the system is made simple in structure and unlikely to malfunction and can be realized at low cost.
(4) Since in the controls of MODE 1 and MODE 2, either the distance sensors 15 or the eyeglass lens 11 are or is in a stopped state, the movement of the sensor pivoting mechanism 13 is simplified and the control is and can readily be simplified.
(5) Since the configuration is that in which the distance sensors 15 are pivoted along the lens curves, the distance sensors 15 never contact the curved eyeglass lens 11.
(6) Since the configuration is that in which, in changing the pivoting radius, the slide tables 21 and 23 of the actuators 17 and 19 move at the same time in opposite directions, up or down, such that the movement amounts cancel each other out, the changing of the pivoting radius with the lens being placed at a fixed position can be realized.
(7) Since the distance sensors 15 are placed at the front and back of the eyeglass lens 11 and since, due to the eyeglass lens 11 being a meniscus lens, the lens surfaces are placed substantially in parallel with the convexness/concaveness of the curves being opposite of each other, the back and front lens surfaces 11A and 11B can be measured at the same time by a single system.

### (Second Embodiment)

Whereas with the first embodiment, a case where the eyeglass lens 11 that is the measurement object is a meniscus lens was described, a case of measuring the front and back surfaces at the same time for a case of a convex lens or a concave lens instead of a meniscus lens shall be described with a shape measurement system for lens of a second embodiment. Although a case where an eyeglass lens 51 is a convex lens shall be illustrated and described with the second embodiment, measurement can also be performed in the same manner when the measurement object is a concave lens. Here, members that are the same as those of the configuration of the first embodiment shall be provided with the same reference signs and detailed description shall be omitted.

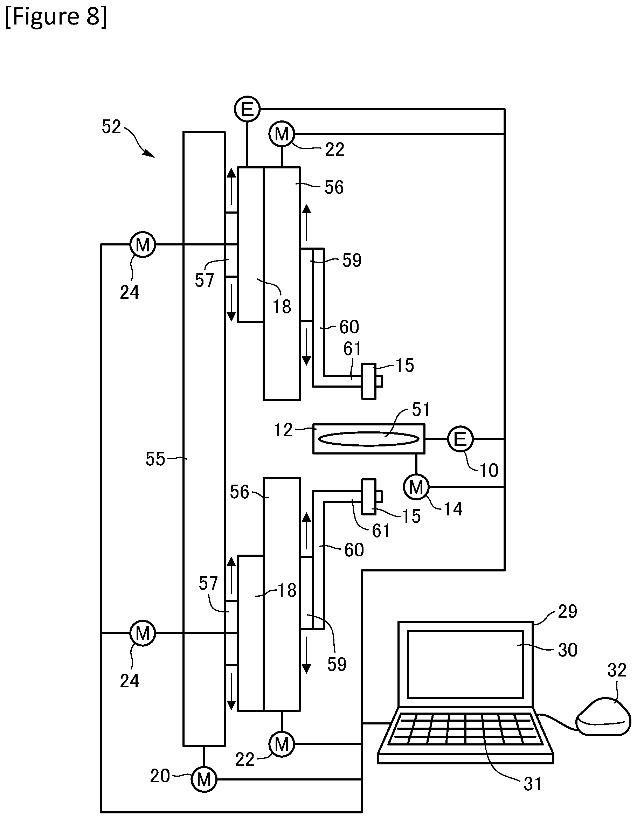

FIG. 8 is a schematic view for describing an outline of principal portions of the shape measurement system for lens of the present embodiment. The shape measurement system for lens includes the rotating holder 12 that houses the eyeglass lens 51 that is to be the measurement object and a sensor pivoting mechanism 52. Description shall be omitted for the rotating holder 12, the first motor unit 14 that rotates the rotating holder 12, the first rotary encoder 10 that detects the rotation angle, etc. The sensor pivoting mechanism 52 shall mainly be described below.

The sensor pivoting mechanism 52 includes a single main actuator 55 and two auxiliary actuators 56 that constitute an upper and lower pair. The auxiliary actuators 56 are each supported by the main actuator 55 via the pivoting tables 18.

The main actuator 55 is an electric actuator and includes two slide tables 57 that are driven by the incorporated second motor unit 20 to slidingly move rectilinearly in a length direction. The main actuator 55 includes an unillustrated screw rod that converts a force in a rotational direction of the motor to a force in a rectilinear direction and the slide tables 57 are moved by rotation of the screw rod. The male screw of the screw rod is divided into a right-handed screw and a left-handed screw (reverse screw) at a length direction center and, when the second motor unit 20 turns the screw rod, the upper and lower slide tables 57 approach or separate from each other such that movement amounts on a basis of a center of the main actuator 55 are equidistant. That is, the two slide tables 57 always move in opposite directions.

The auxiliary actuators 56 are also electric actuators and each include a slide table 58 that is driven by the incorporated third motor unit 22 to slidingly move rectilinearly in a length direction. The two upper and lower auxiliary actuators 56 are respectively disposed on pivoting tables 18 on different slide tables 57 and by the driving of the slide tables 57 of the main actuator 55, the respective auxiliary actuators 56 move by equal distances in mutually opposite directions together with the pivoting tables 18.

Sensor holders 60 are respectively fastened to the slide tables 59 of the respective auxiliary actuators 56. Each sensor holder 60 has a single arm 61 and the distance sensors 15 are respectively mounted to the respective arms 61. The pair of distance sensors 15 are placed such that the mutual emission exits for white light face each other squarely. The pair of distance sensors 15 are placed at upper and lower positions sandwiching the eyeglass lens 51 held by the rotating holder 12 while keeping distances to the eyeglass lens 51. Unlike in the first embodiment, each sensor holder 60 supports just a single distance sensor 15 and an interval between the two upper and lower distance sensors 15 vary in accordance with a thickness of the lens.

In the lens shape measurement system of the second embodiment of such configuration, the control of the first and second motor units 14 and 10 is the same as in the first embodiment, and although there are two upper and lower units each of the third and fourth motor units 22 and 24, it suffices that control be performed such that the actions of the pivoting tables 18, the auxiliary actuators 56, the sensor holders 60, and the distance sensors 15 are mirror symmetrical above and below.

In regard to "A. Input of numerical values in accordance with lens curves," "B. Operations of the rotating holder and the distance sensors," and "C. Acquisition of distance data" of the first embodiment described above, these are the same as in the first embodiment.

By the second embodiment that is such, the same effects as the effects of (1) to (5) of the first embodiment described above are exhibited.

### (Third Embodiment)

A third embodiment is an example where, in the first embodiment or the second embodiment described above, an arrangement is made to correct for a rotational deviation when it occurs when the rotating table 12 rotates with respect to the table. With the third embodiment, a configuration around the rotating table 12 of the lens rotating mechanism shall be described more specifically and redundant contents already described with the first embodiment or the second embodiment shall be omitted.

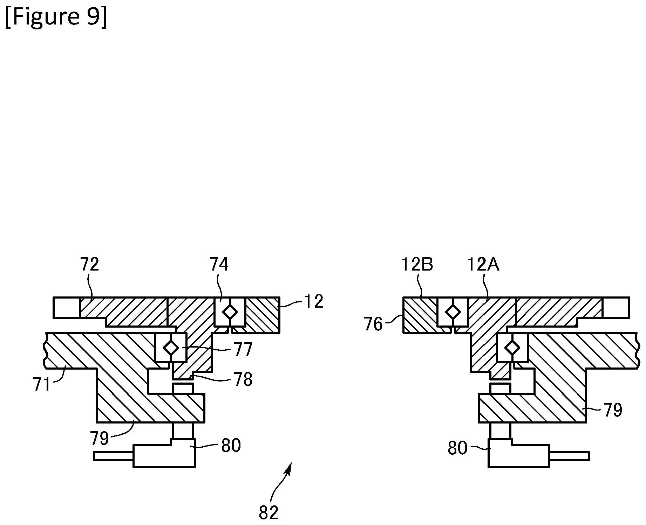

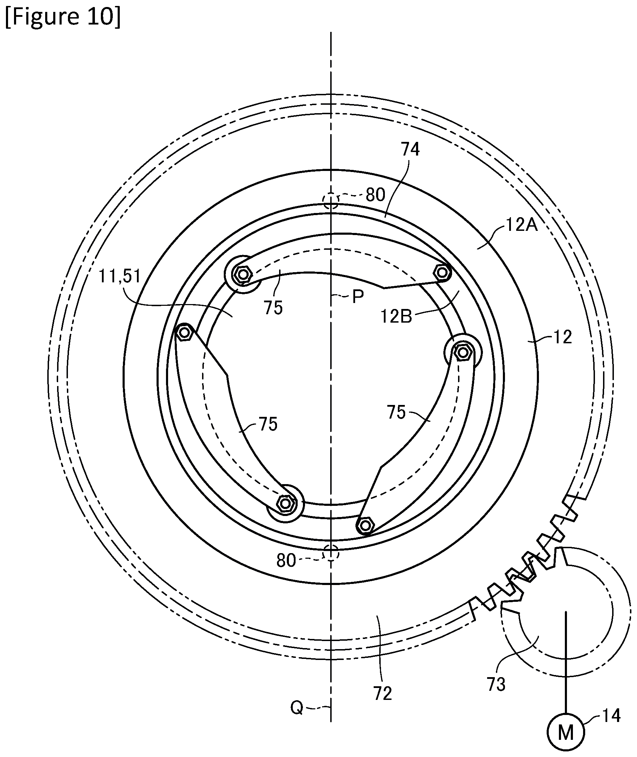

As shown in FIG. 9 and FIG. 10, the lens rotating mechanism is configured from a table 71 on which the rotating holder 12 is set, a ring gear 72 that is fastened to the rotating table 12, a pinion 73, the first motor unit 14, etc. The rotating holder 12 is an aluminum alloy body of ring shape having an outer circumference of circular shape in a plan view and an outer circumferential ring 12A and an inner circumferential ring 12B are connected via a bearing 74. A through hole 76 of circular shape that penetrates through above and below is formed in the inner circumferential ring 12B. Three catch arms 75 for pressing the eyeglass lens 11 or 51 from an outer circumferential side thereof by urging forces and holding the eyeglass lens 11 or 51 in midair are mounted on an upper surface of the inner circumferential ring 12B. FIG. 10 is a state in which the eyeglass lens 11 or 51 is held by the catch arms 75. The inner circumferential ring 12B can be fixed at any phase position with respect to the outer circumferential ring 12A by locking of rotation by an unillustrated lock unit. The ring gear 72 is fastened to an outer side of the outer circumferential ring 12A such as to surround an entire circumference of the rotating holder 12. The pinion 73 that is placed on an upper surface of the table 71 is engaged with the ring gear 72 and the first motor unit 14 is connected to a rotating shaft of the pinion 73.

A through hole 82 of circular shape that penetrates through above and below is formed in a center of the table 71 made of aluminum alloy and the rotating holder 12 is fitted via a bearing 77 onto an inner circumferential surface of the table 71 surrounding the through hole 82. That is, in the state in which the eyeglass lens 11 or 51 is fixed by the inner circumferential ring 12B, the rotating holder 12 is rotatably supported with respect to the table 71 by the bearing 77. Thus, when the pinion 73 is turned by the first motor unit 14 and the drive is transmitted to the ring gear 72, rotational deviation of the bearing 77, rotational deviation caused by member collision of rotation-transmitting members, etc., may occur at times in association with the rotation.

A ring portion 78 protruding downward is formed on the outer circumferential ring 12A of the rotating holder 12 engaged with an inner ring of the bearing 77. A bottom surface of the ring portion 78 is formed to a flat surface constituting a ring shape disposed concentrically to the eyeglass lens 11 or 51. A protrusion 79 of L shape is formed on a lower side of the table 71. A tip end side of the protrusion 79 is bent at a right angle and extended in the rotating holder 12 direction. At positions close to a front side of the protrusion 79, electrostatic sensors 80 as second distance sensors are mounted such that detection surfaces face upward. The electrostatic sensors 80 has the detection surfaces thereof placed to face a bottom surface of the ring portion 78 as a target such as to be at an interval of 0.5 mm at all times when there is no rotational deviation of the rotating holder 12. In the present third embodiment, two electrostatic sensors 80 are disposed and the two electrostatic sensors 80 are placed at positions facing each other at 180 degrees. As indicated by an alternate long and short dash line segment in FIG. 10, a segment P joining the two electrostatic sensors 80 coincides in extension direction with a segment Q that indicates a pivoting direction of the distance sensors 15 that pivot along the lens curves. That is, the distance sensors 15 move while pivoting between the two electrostatic sensors 80.

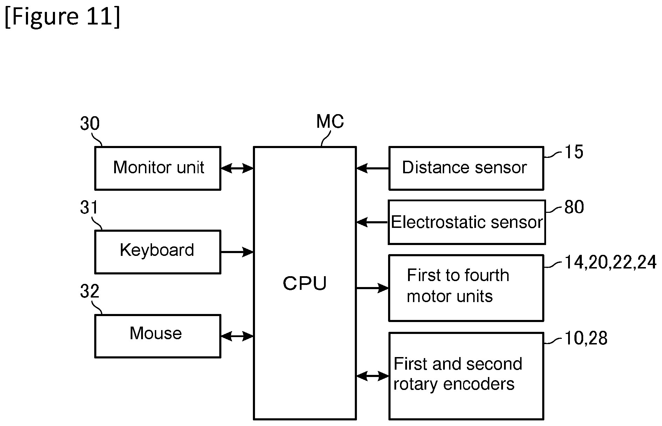

Next, an electrical configuration of the computer unit 29 shall be described based on a block diagram of FIG. 11. Here, components that are not directly relevant to the present invention shall be omitted. The distance sensors 15, the first to fourth motor units 14, 20, 22, and 24, the first and second rotary encoders 10 and 28, the monitor unit 30, the keyboard 31, the mouse 32, etc., are respectively connected via an unillustrated interface to the controller MC of the computer unit 29. Since these are of the same configuration as in the first and second embodiments described above, description shall be omitted. In the third embodiment, the electrostatic sensors 80 are connected in addition to the above to the controller MC.

Next, a controller technique, added with correction of rotational deviation using the electrostatic sensors 80, that the controller MC executes when performing the shape measurement of a lens surface by the present system shall be described. With the present third embodiment, application to the technique of MODE 1 of the first embodiment shall be described as an example.

In regard to "A. Input of numerical values in accordance with lens curves" and "B. Operations of the rotating holder and the distance sensors," these are the same as in the first embodiment.

### C. Acquisition of distance data

1. At each point of 30-degree step in B.1., the controller MC controls the first motor unit 14 to make the rotating holder 12 stop temporarily and, in each of these stoppage states, controls the fourth motor unit 24 to make the distance sensors 15, placed at the end position of the eyeglass lens 11, pivot such as to cross in the diameter direction as in B.2., and acquires the distance data in the diameter direction by the distance sensors 15 at each step angle. In this process, with respect to the curved lens surfaces 11A and 11B, the emission directions of the detection lights of the distance sensors 15 transition while maintaining approximately normal directions to the lens surfaces. This operation is the same as in the first embodiment.

The controller MC performs a saving process upon associating the distance data measured by the distance sensors 15 at the predetermined rotation angle (pivoting angle) according to the second rotary encoder 28 with the measurement angle. In MODE 1, for example, ten distance data are acquired and saved at equal intervals in the diameter direction of the eyeglass lens 11.

The acquisition of the distance data is performed at the same time for the lens surfaces 11A and 11B of the eyeglass lens 11. In this process, since the pair of distance sensors 15 are always at the same interval, the movement is such that advancement of one results in retraction of the other. Since the eyeglass lens 11 is a meniscus lens and the front and back surface curves are thus opposite of each other in convexness/concaveness, the detection lights can be irradiated from approximately normal directions onto both of the lens surfaces 11A and 11B.

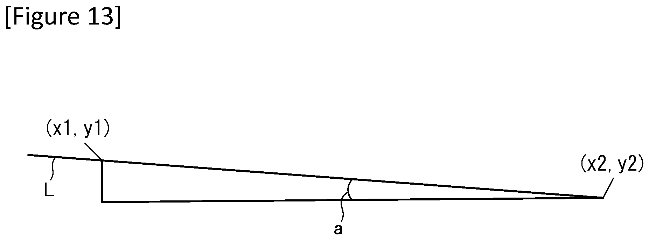

In the third embodiment, at each point of 30-degree step in B.1., the controller MC measures, by the electrostatic sensors 80, distances to the bottom surface of the ring portion 78 at the rotating holder 12 side and calculates, based on a difference thereof, an inclination α (angle) of the rotating holder 12. An example of specific technique for calculating the inclination α shall now be described based on FIG. 13.

Let (x1, y1) and (x2, y2) be respective coordinates of the two electrostatic sensors 80 at a certain rotation phase. In the coordinates, for the x-axis direction, specific numerical values can be provided, for example, as distances from the rotational center. For the y-axis direction, a height of each electrostatic sensor 80 from a horizontal plane serving as a basis is used. A straight line L (y = ax+b) that joins (x1, y1) and (x2, y2) is then determined. The straight line L is obtained using the formula of Formula 1 and solving the simultaneous equations of this and the straight line L for a and b. The slope a of the straight line L can be expressed as a = tan(α) and thus from the inverse function of this, the slope α is determined.$y - y 1 = x 2 - x 1 y 2 - y 1 \left(x-x1\right)$

Also, in the present third embodiment, adjustment is performed in a state where the eyeglass lens 11 is fixed to the catch arms 75 of the rotating holder 12 before rotation such that there is no inclination between the rotating holder 12 before commencement and the table 71. With this state of no inclination as a 0 level (a state in which the straight line P is horizontal), the inclination α is calculated from the difference of the two electrostatic sensor 80 at each 30-degree step.

When the inclination α is present, the position for which the distance data was obtained must be transformed to a position in the state in which there is no inclination. In the present third embodiment, the controller MC performs a rotational movement (coordinate transformation) of the measurement position by the formula of Formula 2 using the inclination α and further performs a parallel movement (coordinate transformation) in the y-axis direction by the formula of Formula 3 and can thereby perform movement of two-dimensional coordinates to a correct lens surface in a state without inclination. Here, the x-axis direction is the diameter direction of the lens and the y-axis direction is a thickness direction of the lens. Since the straight line P joining the two electrostatic sensor 80 coincides in extension direction with the straight line Q that indicates the pivoting direction of the distance sensors 15 that pivot along the lens curves, it suffices here to simply modify the inclination of coordinates of the two-dimensional pivoting direction and thus the calculation is comparatively simple.

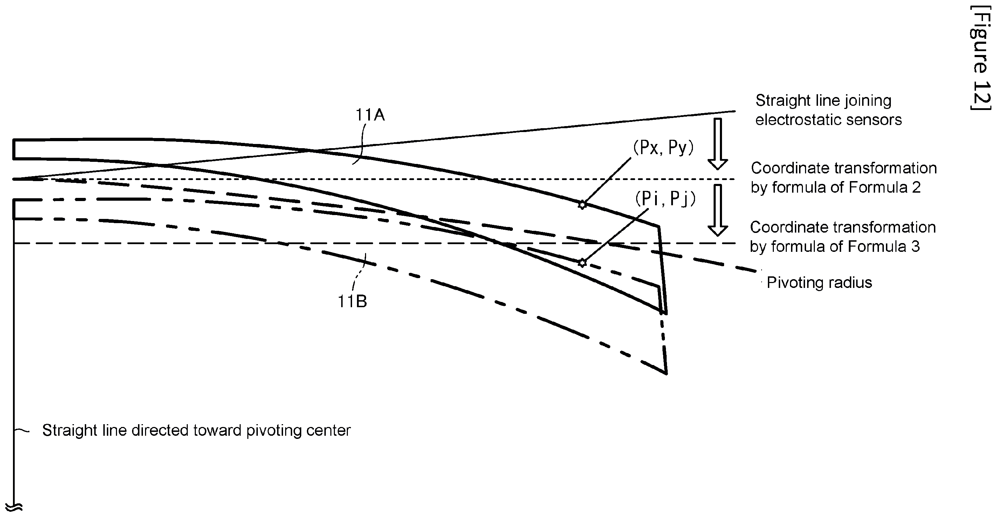

The process of this coordinate transformation shall now be described based on FIG. 12. In FIG. 12, an actually measured eyeglass lens 11A is indicated by solid lines and an eyeglass lens 11B postulated to be in a correct horizontal position is indicated by virtual lines. A projection of a certain point (Px, Py) on the eyeglass lens 11A onto a point (Pi, Pj) on the corresponding eyeglass lens 11B shall be considered. To cancel the inclination α that the eyeglass lens 11 indicated by the solid lines has, first, the formula of Formula 2 is applied. In short, this is equivalent to performing a rotational movement of an inclined straight line P0 to a horizontal straight line P1. Next, since the eyeglass lens 11A and the eyeglass lens 11B will be shifted relatively in pivoting center, the formula of Formula 3 is applied to perform movement to corresponding coordinates on the eyeglass lens 11B in the inherently correct position.$\begin{matrix}Rotational movement \\ \left(\begin{matrix}{p}_{x} \\ {p}_{y}\end{matrix}\right) = \left(\begin{matrix}cos \left(-α\right) & - sin \left(-α\right) \\ sin \left(-α\right) & cos \left(-α\right)\end{matrix}\right) \left(\begin{matrix}{p}_{u} \\ {p}_{v}\end{matrix}\right) \\ \left\{\begin{matrix}{p}_{x} : x - coordinate of point p with 0 ′ as the origin \\ {p}_{y} : y - coordinate of point p with 0 ′ as the origin \\ \begin{matrix}{p}_{u} : x - coordinate of point p upon coordinate rotation \\ by - α with 0 ′ as the origin\end{matrix} \\ {p}_{v} : y - coordinate of point p upon coordinate rotation \\ by - α with 0 ′ as the origin\end{matrix}\right.\end{matrix}$$\begin{matrix}Parallel movement in y - axis direction \\ {P}_{i} = {p}_{u} \\ {P}_{j} = {p}_{v} - b \\ \left\{\begin{matrix}{p}_{i} : y - coordinate of point p upon movement by - b in y - \\ axis direction\end{matrix}\right.\end{matrix}$

2. In B.3., ten distance data can be acquired for each of twelve directions at 30-degree intervals for the front and back lens surfaces 11A and 11B of the eyeglass lens 11. Although these data can be used directly as the shape data of the measurement object lens, since the points are on the curved surfaces of the lens, it is advantageous in terms of handling to project these onto a plane and perform transformation to planar data. When the inclination α is present as described above, coordinates that have been corrected for the inclination are used in this process. The specific calculation technique that is applied subsequently is the same as in the first embodiment and description shall thus be omitted.

The third embodiment that is such exhibits the effects of the first and second embodiments described above in addition to unique effects such as follows.
(1) Even when, between the rotating holder 12 and the table 71, there is a rotational phase position that is not horizontal due to shaking caused by a rotational deviation, since the inclination α thereof is canceled out, a more accurate lens surface shape can be measured.
(2) Since the pivoting direction (the straight line Q) and the straight line P joining the two electrostatic sensors 80 are placed such as to coincide, it suffices to consider just the planar direction in performing the calculation for canceling out the inclination α and the calculation is thus made easy.

The above-described embodiments have been described merely as examples of concrete embodiments to show the principle and concept of the present invention. That is, the present invention is not limited to the embodiments described above. The present invention can also be embodied by, for example, the following modifications.
- Mechanical configurations of the above-described embodiments are an example. Implementation may be performed by other configurations. For example, although in what was described above, the configuration was such that the distance sensors 15 are made to pivot along the lens curves by the two rectilinearly moving actuators 17 and 19 and the pivoting table 18, implementation by a multi-axis robot is also possible.
- The type of the distance sensors 15 may be changed.
- Although in the above-described embodiments, the pivoting radius that approximately follows the lens curves is set before the distance sensors 15 are pivoted, in a case of measuring a lens with which the curves of the lens change, such as in an aspherical lens or a progressive power lens, control such as changing the pivoting radius in accordance with the lens curves during pivoting may also be performed.
- The controls of MODE 1 and MODE 2 of the above-described first embodiment is an example. Although in these controls, either the distance sensors 15 or the eyeglass lens 11 are or is in a stopped state during measurement by the distance sensors 15, a control where both move may also be performed. For example, control may be performed such that the distance sensors 15 are pivoted such that the distance sensors 15 cross in the radial direction from the geometric center of the eyeglass lens 11 and the eyeglass lens 11 is rotated. In this case, scanning lines of the distance sensors 15 form loci of spiral shape on the lens surfaces.

- The number of distance data acquired in the controls of MODE 1 and MODE 2 of the first embodiment is an example and, for example, acquisition may be more performed more finely (that is, at a high density).
- Although in MODE 1 and MODE 2 of the above-described embodiment 1, the distance data were acquired based on the predetermined rotation angle (pivoting angle) according to the second rotary encoder 28, a control may be performed where the distance data are acquired based not on angle but on other information, for example, for each predetermined timing based on a time it takes for the eyeglass lens 11 (the rotating holder 12) to rotate by one turn.
- Although in the first and second embodiments, control was performed such as to acquire the distance data by measuring the front and back surfaces of the lens at the same time, this does not have to be performed at the same time.
- Although the distance sensors 15 are confocal type sensors using the white lights by the multi-lens optical system as the detection lights, these may be distance sensors of other types and a distance sensor using, for example, laser light or maser light as the detection light may be used in the system.
- Although in the above, the eyeglass lens 11 is placed horizontally (such that the optical axis is vertical), the placement of the eyeglass lens 11 does not have to be horizontal. However, since the eyeglass lens 11 rotates, it is preferably placed horizontally to avoid issues resulting from wear of the bearings of its turning shaft.
- Although a description was provided where the third embodiment is applied to MODE 1 of the first embodiment, it may be applied to another embodiment instead. For example, it may also be applied to MODE 2 of the first embodiment or to the second embodiment. It may also be applied to a control besides MODE 1 and MODE 2.
- Although in the third embodiment, adjustment is performed initially such that there is no inclination between the rotating holder 12 and the table 71, for example, the rotating holder 12 may be actually rotated and calculation to assume a horizontal state may be performed based, for example, on an average value or a minimum value of distance that has been obtained. In short, it suffices that a reference horizontal line can be determined.
- Although the two electrostatic sensors 80 are placed at the table 71 side, these may be provided at the rotating holder 12 side instead. Also, three or more of the electrostatic sensors 80 may be provided. A distance sensor other than the electrostatic sensors 80 may also be used.
- Although in the above, a description was provided for the case of measuring the surface shapes of an eyeglass lens as an example, a lens of a lens other than an eyeglass lens, for example, an optical lens such as an objective lens or ocular lens of a telescope, a lens of a magnifying lens, etc., may be the measurement object.

The present invention is not limited to the configuration according to the aforementioned embodiment. Components of the respective embodiments and modifications described above may be arbitrarily selected and combined. Arbitrary components of each embodiment and of each modification may be arbitrarily combined with arbitrary components described in the Solution to Problem or components embodying the arbitrary components described in the Solution to Problem. The applicant also intends to acquire the rights to these in an amendment or a divisional application of the present application.

In addition, the applicant has the intention to acquire the rights to the whole design or a partial design by changing the application to a design application. In the drawings, the entirety of the apparatus concerned is drawn by a solid line, and the drawings include not only the whole design but also a partial design to be claimed for a part of the apparatus. For example, as well as a part of members of the apparatus as a partial design, the drawings also include a part of the apparatus as a partial design independently of the members. A part of the apparatus may be a part of members of the apparatus, or a part of the member.

### Reference Signs List

11 ... Eyeglass lens, 12 ... Rotating holder as rotating mechanism, 15 ... Distance sensor, 13... Sensor pivoting mechanism as holding mechanism and attitude control mechanism, 25 ... Sensor holder as holding mechanism.

## Claims

1. A shape measurement system for lens surface being a measurement system for measuring a lens surface shape of at least one of either of a front surface and a back surface of a lens and comprising:
a rotating mechanism that holds the lens and rotates it in a circumferential direction;
a distance sensor that irradiates a detection light onto the lens surface that is to be a measurement object and measures a distance based on a reflection light of the detection light from the lens surface;
a holding mechanism that holds the distance sensor; and
an attitude control mechanism that moves the distance sensor in a direction traversing the lens surface while keeping the distance to the lens surface and controlling an attitude of the holding mechanism such that, in association with movement of the distance sensor, the detection light is irradiated onto the lens surface to be the measurement object from a normal direction to the lens surface that is to be the measurement object or a direction close to the normal direction.

2. The shape measurement system for lens surface according to Claim 1, wherein the attitude control mechanism has a configuration with
a first drive unit installed with the holding mechanism and rectilinearly advancing/retreating the distance sensor and
a second drive unit installed with a pivoting mechanism and rectilinearly advancing/retreating the pivoting mechanism,
the first drive unit being installed on the pivoting mechanism,
advancing and retreating directions of the distance sensor and advancing and retreating directions of the pivoting mechanism being placed in parallel,
a pivoting radius of the pivoting mechanism being adjusted by changing a distance from a pivoting center of the pivoting mechanism to the distance sensor by advancing/retreating the pivoting mechanism and the pivoting mechanism being controlled at the adjusted pivoting radius to make the distance sensor pivot on a curve corresponding to a curvature of the curve of the lens surface, and
an interval between the lens that is placed at a fixed position and the sensor being maintained by moving the distance sensor in a direction opposite a movement direction of the pivoting mechanism and by the same or an approximately same movement amount as a movement amount of the pivoting mechanism when it advances/retreats.

3. The shape measurement system for lens surface according to Claim 1, wherein the distance sensor moves such as to traverse between a center and an outer circumference of the lens surface.

4. The shape measurement system for lens surface according to Claim 1 or 2, wherein the distance sensors are respectively placed at positions facing the lens surfaces at the front and the back of the lens such as to sandwich the lens and the lens surface shapes at the front and the back of the lens are measured at the same time by the different distance sensors respectively.

5. The shape measurement system for lens surface according to Claim 1 or 2, comprising: a calculating means that calculates the shape of the lens surface based on distance data at a plurality of points on the lens surface obtained by scanning by the lens that is rotating and the distance sensor that is moving such as to traverse the lens surface relatively.

6. The shape measurement system for lens surface according to Claim 1, wherein the rotating mechanism includes a rotating portion that rotates together with the lens and a holding portion that holds the rotating portion and one or a plurality of a second distance sensor are disposed at the holding portion side and measurement of a distance to a target at the rotating portion side is enabled and when the distance measured in association with rotation of the rotating portion changes, the distance data of the lens surface is corrected based on an amount of change measured by the second distance sensor.

7. The shape measurement system for lens surface according to Claim 1, wherein the rotating mechanism includes a rotating portion that rotates together with the lens and a holding portion that holds the rotating portion and one or a plurality of a second distance sensor are disposed at the rotating portion side and measurement of a distance to a target at the holding portion side is enabled and when the distance measured in association with rotation of the rotating portion changes, the distance data of the lens surface is corrected based on an amount of change measured by the second distance sensor.

8. The shape measurement system for lens surface according to Claim 6 or 7, wherein two of the second distance sensors are placed at positions facing each other at 180 degrees across a rotational center of the lens and the amount of change of the distance is acquired based on a difference in measurement values of the two second distance sensors.

9. The shape measurement system for lens surface according to Claim 8, wherein the distance sensor is moved along a segment joining the two second distance sensors such as to traverse between the center and the outer circumference of the lens surface.

10. The shape measurement system for lens surface according to Claim 6 or 7, wherein a surface to be the target of the second distance sensor is a flat surface constituting a ring shape placed along an outer circumferential shape of the lens.

11. A shape measurement method for lens surface being a method for measuring a lens surface shape of at least one of either of a front surface and a back surface of a lens and
comprising the steps of using a distance sensor that irradiates a detection light onto a measurement object and measures a distance to the measurement object based on a reflection light of the detection light from the lens surface, placing the distance sensor such that the detection light is irradiated from a normal direction to the lens surface that is the measurement object or a direction close to the normal direction, scanning the lens surface by the distance sensor in such a placement state and acquiring distance data at a plurality of points on the lens surface, and calculating the shape of the lens surface based on the plurality of distance data obtained.

12. The shape measurement method for lens surface according to Claim 11, wherein control is performed such that the lens rotates in a circumferential direction and the distance sensor pivots along the curve of the lens surface in a direction intersecting the lens in a state in which the detection light is irradiated onto the lens surface from the normal direction or the direction close to the normal direction.

13. The shape measurement method for lens surface according to Claim 12, wherein control is performed such that when the distance sensor pivots, it does not interfere with the lens surface of the lens.

14. The shape measurement method for lens surface according to any one of Claims 11 to 13, wherein the distance sensors are respectively placed at positions facing the lens surfaces at the front and the back of the lens such as to sandwich the lens and the lens surface shapes at the front and the back of the lens are measured at the same time by the different distance sensors respectively.

15. The shape measurement method for lens surface according to any one of Claims 11 to 13, wherein the detection light irradiated from the distance sensor is configured to be a coherent light.

16. The shape measurement method for lens surface according to any one of Claims 11 to 13, wherein the lens is controlled such as to rotate in the circumferential direction and stop temporarily at each predetermined rotation angle, the distance sensor in a state of being made to squarely face the lens surface is controlled, when the lens stops temporarily, to move in a diameter direction of the lens surface, and the distance data are acquired at the plurality of points in association with the movement.

17. The shape measurement method for lens surface according to any one of Claims 11 to 13, wherein the distance sensor in a state of being made to squarely facing the lens surface is controlled to stop at an arbitrary plurality of stop positions during movement in the diameter direction of the lens and the lens is controlled to rotate at each stop position of the distance sensor to acquire the plurality of distance data.

18. The shape measurement method for lens surface according to any one of Claims 11 to 13, wherein a rotational deviation of a rotating portion that rotates together with the lens is measured by a second distance sensor, which measures a distance from a holding portion side that holds the rotating portion with the rotating portion side being a target, and when the measured distance changes in association with the rotation of the rotating portion, the amount of change is used as a correction value to correct the distance data and calculate the shape of the lens surface.

19. The shape measurement method for lens surface according to any one of Claims 11 to 13, wherein a rotational deviation of a rotating portion that rotates together with the lens is measured by a second distance sensor that is disposed on the rotating-portion side and measures a distance with a holding portion side that holds the rotating portion being a target, and when the measured distance varies in association with rotation of the rotating portion, the amount of change is used as a correction value to correct the distance data and calculate the shape of the lens surface.

20. The shape measurement method for lens surface according to Claim 18 or 19, wherein two of the second distance sensors are placed at positions facing each other at 180 degrees across a rotational center of the lens and the amount of change of the distance is acquired based on a difference in measurement values of the two second distance sensors.

21. The shape measurement method for lens surface according to Claim 20, wherein the distance sensor is moved along a segment joining the two second distance sensors such as to traverse between the center and the outer circumference of the lens surface.
